(19) Europäisches Patentamt
European Patent Office
Office européen des brevets

(11) EP 1 188 848 B1

(12) EUROPEAN PATENT SPECIFICATION

(45) Date of publication and mention of the grant of the patent:
**18.04.2007 Bulletin 2007/16**

(21) Application number: **00900377.3**

(22) Date of filing: **13.01.2000**

(51) Int Cl.:
*D01F 6/84* (2006.01) *D03D 15/00* (2006.01)
*D03D 25/00* (2006.01) *D04H 1/42* (2006.01)
*C08G 63/692* (2006.01) *C08G 63/82* (2006.01)
*D01F 1/02* (2006.01) *D03D 1/00* (2006.01)
*D03D 15/12* (2006.01) *B60R 21/16* (2006.01)
*D01F 1/07* (2006.01) *C08G 63/695* (2006.01)
*C08L 67/02* (2006.01) *D01F 6/92* (2006.01)
*C08G 63/68* (2006.01) *D04H 3/16* (2006.01)

(86) International application number:
**PCT/JP2000/000137**

(87) International publication number:
**WO 2000/043578 (27.07.2000 Gazette 2000/30)**

(54) **FLAME-RETARDANT POLYESTER FIBER, WOVEN OR KNITTED FLAME-RETARDANT POLYESTER FIBER FABRIC, NONWOVEN FLAME-RETARDANT POLYESTER FIBER FABRIC, AND WOVEN OR KNITTED SUEDE FABRIC**

FLAMMVERZÖGERNDE POLYESTERFASERN, GEWEBE, STRICKWAREN, VLIESSTOFFE UND WILDLEDERARTIGE GEWEBTE ODER GESTRICKTE TEXTILWARE AUS DIESEN FASERN

FIBRE DE POLYESTER ANTI-FEU, TISSU EN FIBRE DE POLYESTER ANTI-FEU TISSE OU MAILLE, TISSU DE CE TYPE NON TISSE, ET TISSU SUEDE TISSE OU MAILLE

(84) Designated Contracting States:
**DE FR GB**

(30) Priority: **19.01.1999 JP 1008999**
**03.12.1999 JP 34512499**
**13.12.1999 JP 35358999**

(43) Date of publication of application:
**20.03.2002 Bulletin 2002/12**

(73) Proprietor: **Toyo Boseki Kabushiki Kaisha**
**Osaka-shi,**
**Osaka 530-8230 (JP)**

(72) Inventors:
- **MATSUDA, Masaou**
**Toyo Boseki Kabushiki Kaisha**
**Shiga 520-0292 (JP)**
- **SATO, Maki**
**Toyo Boseki Kabushiki Kaisha**
**Ohtsu-shi,**
**Shiga 520-0292 (JP)**
- **GYOBU, Shoichi**
**Toyo Boseki Kabushiki Kaisha**
**Ohtsu-shi,**
**Shiga 520-0292 (JP)**
- **YOSHIDA, Fumikazu**
**Toyo Boseki Kabushiki Kaisha**
**Ohtsu-shi,**
**Shiga 520-0292 (JP)**
- **OKUHARA, Munekazu**
**Toyo Boseki Kabushiki Kaisha**
**Yamaguchi 740-8567 (JP)**
- **DOKE, Takashi**
**Osaka-shi,**
**Osaka 550-0006 (JP)**
- **TAKEUCHI, Hideo**
**Toyo Boseki Kabushiki Kaisha**
**Osaka-shi,**
**Osaka 530-8230 (JP)**
- **SHIMIZU, Kenji**
**Toyo Boseki Kabushiki Kaisha**
**Osaka-shi,**
**Osaka 530-8230 (JP)**

(74) Representative: **Vossius & Partner**
**Siebertstrasse 4**
**81675 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

(56) References cited:
**EP-A- 0 432 620**
**EP-A- 0 648 809**
**EP-A- 0 731 124**
**EP-A- 0 773 140**
**WO-A-94/19388**
**JP-A- 6 016 796**
**JP-A- 6 287 414**
**JP-A- 62 133 113**
**US-A- 3 941 752**
**US-A- 4 157 436**
**US-A- 4 737 567**
**US-A- 5 494 993**
**US-A- 5 713 601**

## Description

The present invention relates to a flame-retardant polyester fiber, which is superior in dyeing property, color fastness to light, abrasion resistance and heat stability, and which also has fine whiteness, and to a cloth and raised woven, knitted fabric made by the use of this fiber.

Because polyester fibers are easy to handle and economically advantageous as compared to other synthetic fibers, they are applied to an extremely broad range of use. On the other had, they are inferior to natural fibers in feeling, function and the like, because they have a dense molecule structure, are hydrophobic and have a uniform fiber surface. As regards dyeing property, polyester requires dyeing under high temperature and high pressure conditions, for, otherwise, the dye cannot enter the molecules and cannot dye polyester to a sufficient color density, which is a defective aspect.

As a recent tendency, novel polyester fibers having various functions (e.g., water absorption, moisture absorption, generation of heat, heat storage, flame retardancy and the like), have been increasingly developed to cope with the diversification of the needs of the consumers, and a great variety of functional fibers have been developed. A fiber product having flame retardancy is, among such polyester fibers, drawing increasing attention whether generally or publicly, as necessitated by the rise in consciousness toward protection against disasters, strengthening of flame retardancy regulations associated with the preparation of the law and the like. In particular, a number of polyester products are used for interior-related products for hotels, inns, hospitals, welfare institutions and the like, and these products are indispensably required to have flame retardancy. The demand for fiber products having flame retardancy has been expanding markedly at home as well as abroad, and is expected to expand further in the future.

However, conventional flame-retardant products have many problems in that harmful gas is generated on incineration, such as cyanide, halogen and the like, the feeling of the product is rough and hard, since a flame-retardant agent is applied to the fiber surface in a post-processing treatment, the flame retardancy of the product lacks resistance to washing, and the like.

In an attempt to solve such defects, one method proposes copolymerization with a phosphorus compound to introduce phosphorus atom (one of the atoms that impart flame retardancy) into the molecular main chain (main chain type, JP-B-36-21050, JP-B-38-9447, JP-B-53-13479, JP-A-50-53354). These main chain type methods are all associated with problems of poor resistance to hydrolysis due to the presence of phosphorus atom in the polyester main chain, degraded dyeing property due to high crystallinity, poor feeling when processed into a cloth, and the like.

US 5,713,601, EP-A-0 773 140, EP-A-0 731 124, US 5,494,993, EP-A-0 648 809, WO 94/19388 and EP-A-0 432 620 all relate to fibers carrying a phosphorous compound incorporated in their main polymer chain.

There is also known a flame-retardant copolymerized polyester fiber (side chain type) wherein a phosphorus atom is introduced into the side chain of polyester molecule (JP-B-60-38417 and the like). The side chain type phosphorus copolymerized polyester fiber is superior in dyeing property as compared to the main chain type, but is not sufficient. When the dyeing property of a side chain type phosphorus copolymerized polyester fiber is improved, abrasion resistance and heat stability tend to fall. A flame-retardant polyester fiber superior in dyeing property and mechanical property, such as abrasion resistance, heat stability and the like, has not been obtained as yet.

In addition, the above-mentioned phosphorus copolymerized polyester is associated with problems of decreased polymerization rate due to the phosphorus compound, darkening and degraded spinning operability due to the reduced amount of antimony catalyst, and poor color tone due to the yellowness of monomer itself.

Thus, JP-A-6-16796 proposes a method of improving polymerization rate and color tone of polymer by combining a specific condensation polymerization catalyst. This method can improve polymerization rate but the use of a titanium catalyst results in degraded heat stability of the polymer and increased yellow coloring thereof, particularly after spinning. As a result, the color tone of the polymer can be improved to a certain degree but not enough to increase its whiteness, which makes this polymer inapplicable to a use requesting highs whiteness.

The aforementioned main chain type phosphorus copolymerized polyester shows poor resistance to hydrolysis and decreased tenacity of fiber in a subsequent step because phosphorus atoms are incorporated in the polymer main chain. Furthermore, US 4,737,567 discloses a phosphorous containing random copolyester.

The polyester raised warp knitted fabric has been widely used for clothing, car seat, chair cover, coverlet used over a *kotatsu* and the like. As the situation stands now, however, raised warp knitted fabric made of a polyester fiber has markedly low flame retardancy because of the steps applied for raising, dyeing and antistatic processing, to the point that the flame retardancy standard set for each use can be hardly met. It is needless to say that there is no polyester raised warp knitted fabric that satisfies the after-flame time of 3 seconds or less after setting a flame by a vertical method after 3 times of washing, which is the flame retardancy standard of general covering of chair in the theaters in Europe, such as in Italy and Germany, though certain fabric satisfied the flame retardancy by laminating or coating the back of a polyester raised cloth with a flame-retardant agent.

Such product with a processed backing has difficulty in feeling and a polyester raised warp knitted fabric superior in flame retardancy and feeling has not been obtained.

It is a first object of the present invention to provide a flame-retardant polyester fiber superior in dyeing property

and mechanical property, such as abrasion resistance, heat stability and the like, which affords grace feeling and stable flame retardancy over a long period of time.

A second object of the present invention is to provide a flame-retardant polyester fiber having high flame retardancy and extremely fine whiteness.

A third object of the present invention is to provide a woven, knitted fabric and a nonwoven fabric using the above-mentioned unconventional and novel flame-retardant polyester fiber.

A fourth object of the present invention is to provide a suede raised woven, knitted fabric using the above-mentioned unconventional and novel flame-retardant polyester fiber, which affords high flame retardancy and a markedly improved feeling.

The first embodiment of the present invention is a flame-retardant polyester fiber comprising a side chain type phosphorus compound copolymerized polyester comprising ethylene terephthalate units in a proportion of not less than 80 mol%, which satisfies the following formulas (1)-(3) and which has a phosphorus atom content of 500-50,000 ppm and an intrinsic viscosity of 0.58 to 0.63 dl/g;

$$\tan \delta_{max} \geq 0.1740 \qquad \text{(formula 1)}$$

$$T\alpha - 3.77 \times \ln(\text{dtpf}) \leq 137.0 \qquad \text{(formula 2)}$$

$$1.331 \leq SG - \frac{\sqrt{\Delta n}}{8.64} \leq 1.345 \qquad \text{(formula 3)}$$

wherein $\tan \delta_{max}$ is the maximum value of loss tangent in a dynamic viscoelasticity measurement, $T\alpha$ is a temperature at which loss tangent reaches the maximum, dtpf is single fiber fineness (dtex), SG is density (g/cm$^3$), and $\Delta n$ is birefringence. The flame-retardant polyester fiber is characterized by an abrasion resistance of not less than 6500 times of reciprocation of a friction block up to the occurrence of cutting by abrasion under a load of 0.098 N/tex in a yarn abrasion test and a tensile elongation at break (DE) of 25 - 45%.

The second embodiment of the present invention is the flame-retarant polyester fiber of claim 1, which comprises a copolymerized polyester obtained by adding a phosphorus compound of the following formula (1) :

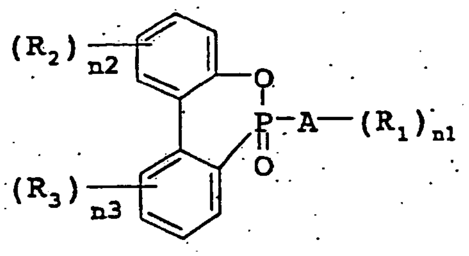

(1)

wherein $R_1$ is a monovalent ester-forming functional group, $R_2$ and $R_3$ are the same or different and each is selected from a halogen atom, a hydrocarbon group having 1 to 10 carbon atoms and $R_1$, A is a divalent or trivalent organic residue, n1 is 1 or 2 and n2 and n3 are each an integer of 0 to 4.

The third embodiment is the flame-retardant polyester fiber of claim 1, which shows shrinkage in hot water (SHW) of not more than 10%.

The fourth embodiment is the flame-retardant polyester fiber of claim 1, which satisfies the following formula 4, wherein L value is not less than 67 and b value is not more than 10.00 as measured with a Hunter's color-difference meter:

$$\%B.B. < 0.5 \qquad \text{(formula 4)}$$

wherein %B.B. is a proportion of ester bond broken upon immersion in a closed system in pure water at 130°C for 6 h,

which can be determined by the following formula (5) wherein an intrinsic viscosity before immersion is $[\eta]_i$ and that after immersion is $[\eta]_f$, and the intrinsic viscosity is determined in a mixed solvent of phenol/1,1,2,2-tetrachloroethane (weight ratio 3/2) at 30°C:

$$\%B.B. = 0.244 \times \{[\eta]_f^{-1.471} - [\eta]_i^{-1.471}\} \quad \text{(formula 5)}.$$

The fifth embodiment is the flame-retardant polyester fiber of claim 1, wherein the phosphorus compound copolymerized polyester contains an organic fluorescent brightener in a proportion of 0.01-1 wt% and, as a condensation polymerization catalyst, an antimony compound, a germanium compound and a cobalt compound in amounts that simultaneously satisfy the following formulas (6)-(9):

$$30 \leq S \leq 400 \quad \text{(formula 6)}$$

$$10 \leq G \leq 100 \quad \text{(formula 7)}$$

$$5 \leq C \leq 40 \quad \text{(formula 8)}$$

$$200 \leq S+2G+C \leq 400 \quad \text{(formula 9)}$$

wherein S, G and C are each a content (ppm) of an antimony atom, germanium atom or cobalt atom relative to the polyester.

The sixth embodiment is a flame-retardant polyester woven, knitted fabric comprising the flame-retardant polyester fiber of claim 1 at least in a part thereof.

The seventh embodiment is a suede raised woven, knitted fabric wherein the flame-retardant polyester woven, knitted fabric of claim 8 has a coefficient of friction of a surface of the woven, knitted fabric by a surface tester KES- FB4 of 0.200-0.300.

The eighth embodiment is a flame-retardant polyester nonwoven fabric comprising the flame-retardant polyester fiber of claim 1 at least in a part thereof.

The present invention is explained in detail in the following.

The polyester in the present invention comprised terephthalic as a main acid component and ethylene glycol, as a main glycol component. It may be a polyester wherein a part of the terephthalic acid component is substituted by a different bifunctional carboxylic acid component and/or a part of the glycol component is substituted by at least one alkylene glycol selected from trimethylene glycol and tetramethylene glycol or other diol component.

Examples of the dicarboxylic acid include saturated aliphatic dicarboxylic acid as exemplified by oxalic acid, malonic acid, succinic acid, glutalic acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, dimmer acid and the like and ester-forming derivatives thereof, unsaturated aliphatic dicarboxylic acid as exemplified by fumaric acid, maleic acid, itaconic acid and the like and ester-forming derivatives thereof, aromatic dicarboxylic acid as exemplified by orthophthalic acid, isophthalic acid, 5-(alkali metal)sulfoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4'-biphenyldicarboxylic acid, 4,4'-biphenylsulfone dicarboxylic acid, 4,4'-biphenyl ether dicarboxylic acid, 1,2-bis(phenoxy) ethane-p,p'-dicarboxylic acid, pamoic acid, anthracene dicarboxylic acid and the like and ester-forming derivatives thereof. Of these dicarboxylic acids, terephthalic acid and naphthalenedicarboxylic acid, particularly 2,6-naphthalenedicarboxylic acid, are preferable.

Examples of polyhydric carboxylic acid other than these dicarboxylic acids include ethanetricarboxylic acid, propanetricarboxylic acid, butanetetracarboxylic acid, pyromellitic acid, trimellitic acid, trimesic acid, 3,4,3',4'-biphenyltetracarboxylic acid, and ester-forming derivatives thereof and the like.

Examples of glycol include aliphatic acid glycols such as 1,2-propylene glycol, 1,3-propylene glycol, diethylene

glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, polyethylene glycol, polytrimethylene glycol, polytetramethylene glycol and the like, aromatic glycols as exemplified by hydroquinone, 4,4'-dihydroxybisphenol, 1,4-bis(β-hydroxyethoxy)benzene,1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis (p-hydroxyphenyl)ethane, bisphenol A, bisphenol C, 2,5-naphthalenediol, these glycols added with ethylene oxide, and the like. Of these glycols, ethylene glycol and 1,4-butylene glycol are preferable.

The polyhydric alcohol other than these glycols is exemplified by trimethylolmethane, trimethylolethane, trimethylolpropane, pentaerythritol, glycerol, hexanetriol and the like.

Examples of hydroxycarboxylic acid include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexanecarboxylic acid, ester-forming derivatives of these and the like.

Examples of cyclic ester include ε-caprolactone, β-propiolactone, β-methyl-β-propiolactone, δ-valerolactone, glycolide, lactide and the like.

Examples of ester-forming derivatives of polyhydric carboxylic acid and hydroxycarboxylic acid include alkyl ester, acid chloride, acid anhydride and the like of these.

In the present invention, a polyester consisting of the above-mentioned dicarboxylic acid component and a diol component Comprises an ethylene terephthalate unit in a proportion of not less than 80 mol%.

When improvement in the whiteness of a flame-retardant polyester fiber or a cloth is desired, which is one of the objects of the present invention, an antimony compound, a cobalt compound and a germanium compound are concurrently used in specific amounts as a condensation polymerization catalyst. To be specific, they are desirably used in amounts satisfying the following formulas (6)-(9):

$$30 \leq S \leq 400 \qquad \text{(formula 6)}$$

$$10 \leq G \leq 100 \qquad \text{(formula 7)}$$

$$5 \leq C \leq 40 \qquad \text{(formula 8)}$$

$$200 \leq S+2G+C \leq 400 \qquad \text{(formula 9)}$$

wherein S, G and C are each a content (ppm) of antimony atom, germanium atom or cobalt atom relative to the polyester.

When the amount of the antimony compound added is less than the aforementioned range, the condensation polymerization becomes slow, and when it exceeds the above-mentioned range, the L value as measured with a Hunter's color-difference meter unpreferably decreases. Moreover, when a phosphorus compound is added in a large amount, the antimony compound is reduced by the phosphorus compound. The reduced product becomes a foreign substance and causes increased spinpack pressure during spinning, cutting of yarn, dirty nozzle surface and the like, thereby unpreferably exerting an extremely adverse influence on the spinning operability. One of the major effects of the present invention to reduce the amount of catalyst antimony is the improvement in the productivity.

When the amount added of the germanium compound is less than the above-mentioned range, the condensation polymerization becomes slow, and when it exceeds the above-mentioned range, the production cost becomes higher because germanium is extremely expensive, and the b value of the polymer unpreferably increases.

When the amount added of the cobalt compound is less than the above-mentioned range, the b value of the color tone of the resulting polymer becomes high, and when it exceeds the above-mentioned range, the b value becomes too low and the L value tends to decrease unpreferably.

Furthermore, when G, S and C do not satisfy the aforementioned formula (9) and S+2G+C is less than the above-mentioned range, the speed of the condensation polymerization becomes insufficient, and when it exceeds the above-mentioned range, the color tone and stability of the obtained polymer are degraded unpreferably.

According to the present invention, when to add the above-mentioned condensation polymerization catalyst is not subject to any particular limitation as long as it is before the start of the condensation polymerization, and the catalyst can be added according to a conventionally known method. For example, transesterification method, direct polymerization

method, continuous polymerization method and the like can be used.

According to the production method of the flame-retardant polyester of the present invention, an additive generally used, such as tetraethylammonium hydroxide, organic amine and organic carboxylic acid amide, which are ether binding inhibitors, basic salt such as sodium acetate, lithium acetate and the like, and the like, titanium dioxide which is a matting agent, other flame-retardant auxiliary, pigment such as carbon black and the like, plasticizer, stabilizer, antistatic, orthochromatic agent and the like can be added concurrently.

According to the present invention, an organic fluorescent brightener can be used for improving the whiteness of a fiber. To be specific, a benzoxazole compound is preferable, and Hostalux KS (Clariant) is particularly preferable.

The amount of addition is 0.01 - 1 wt%, wherein an amount less than 0.01 wt% unpreferably leads to an insufficient whiteness-improving effect. Addition of 1 wt% or more of the brightener does not result in an improvement in the effect, and therefore, addition of 1 wt% or more is redundant. The amount is preferably 0.02 - 0.1 wt%.

The aforementioned organic fluorescent brightener may contain a blue dye for the purpose of improving the color tone.

The polymer to be used for the flame-retardant polyester fiber of the present invention is a polyester wherein a phosphorus compound containing phosphorus atom is copolymerized. The phosphorus compound can react with dicarboxylic acid and diol, which are the constituent components of polyester, and can be copolymerized into polyester. The phosphorus compound is one which permits introduction of phosphorus atom into the side chain and/or terminal of the polyester. A compound that permits introduction of phosphorus atom into the side chain is particularly suitable, because it disturbs crystallinity and the orientation of amorphous molecules.

Examples of the phosphorus compound include the compound of the formula (1).

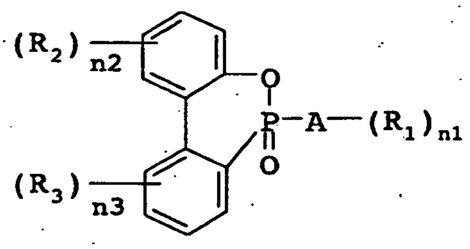

(1)

wherein $R_1$ is a monovalent ester-forming functional group, $R_2$ and $R_3$ are the same or different and each is selected from a halogen atom, a hydrocarbon group having 1 to 10 carbon atoms and $R_1$, A is a divalent or trivalent organic residue, n1 is 1 or 2 and n2 and n3 are each an integer of 0 to 4.

Specific examples of the compound of the formula (1) include the compounds of the following a - β:

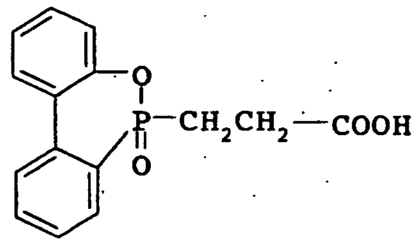

(a)

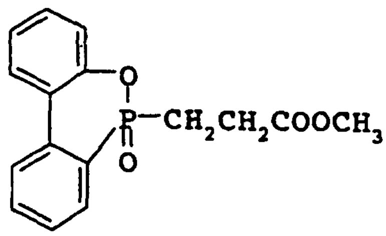

(b)

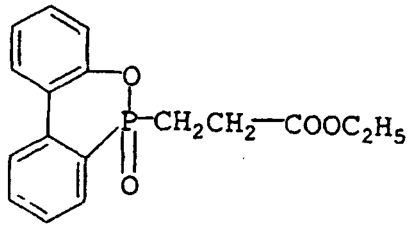

(c)

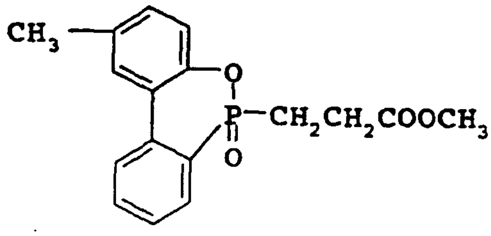

(d)

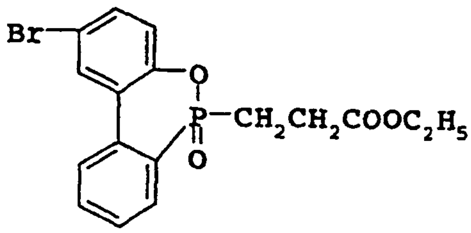

(e)

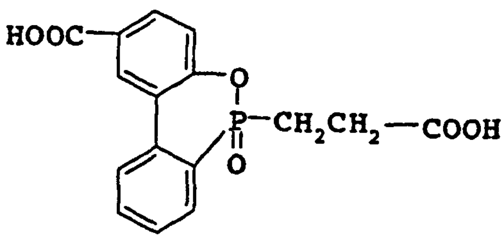

(f)

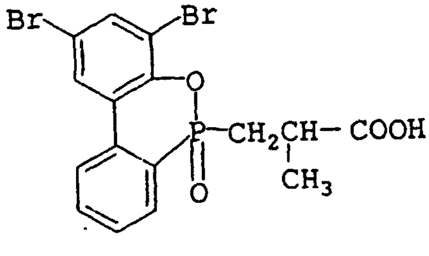

(g)

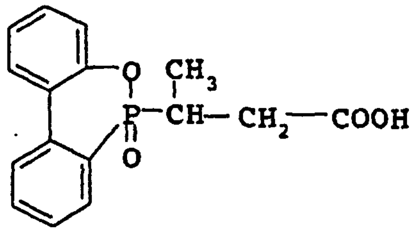

(h)

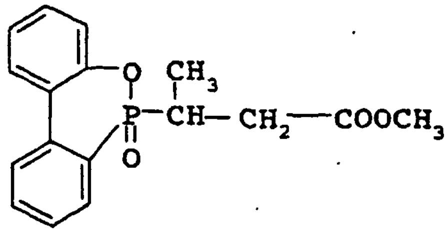

(i)

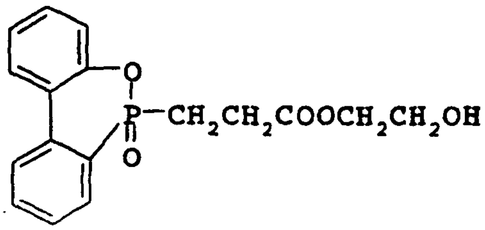

(j)

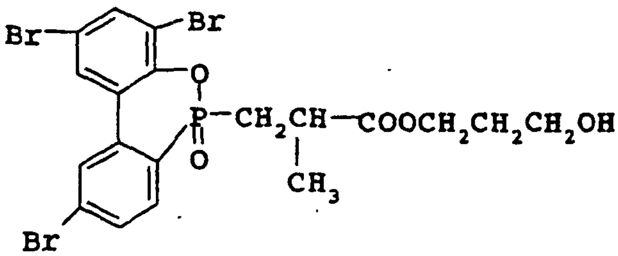

(k)

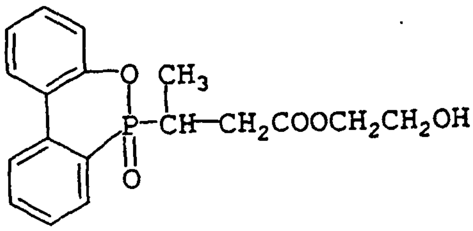

(l)

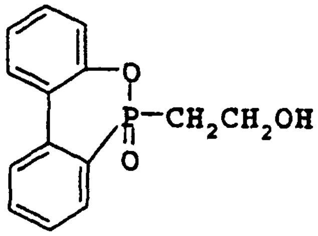

(m)

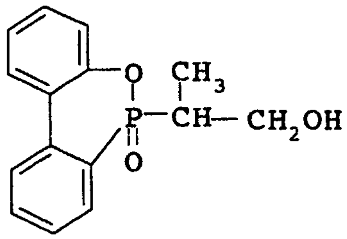

(n)

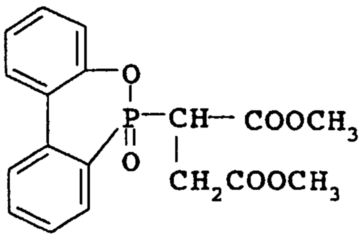

(o)

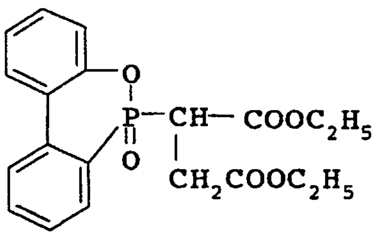

(p)

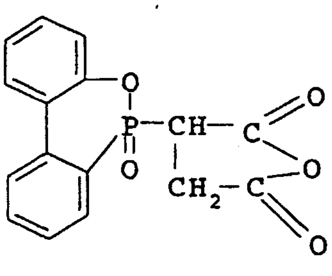

(q)

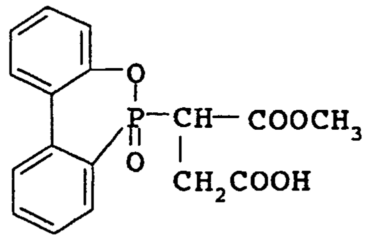

(r)

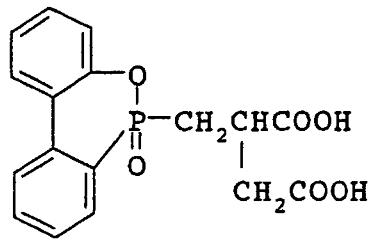

(s)

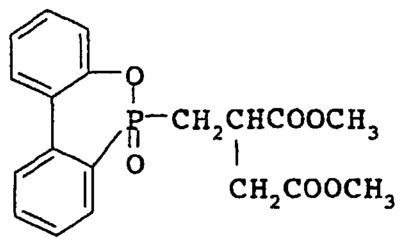

(t)

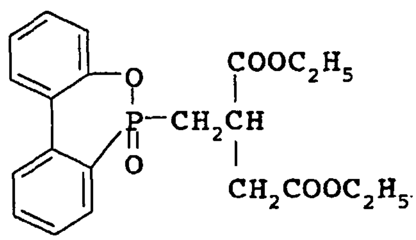

(u)

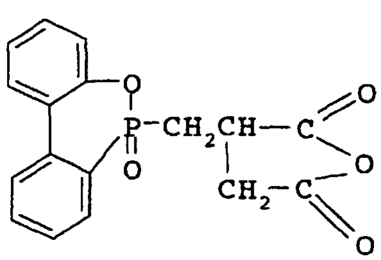

(v)

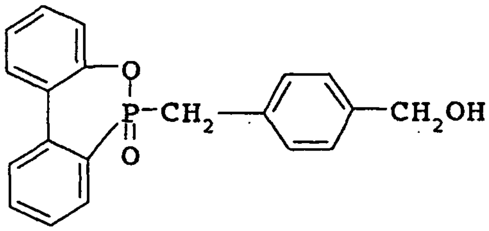

(w)

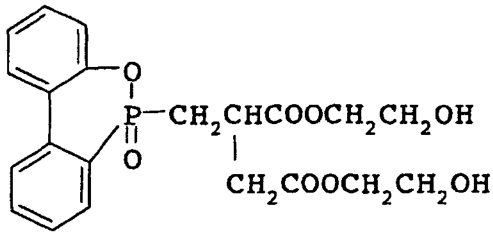

(x)

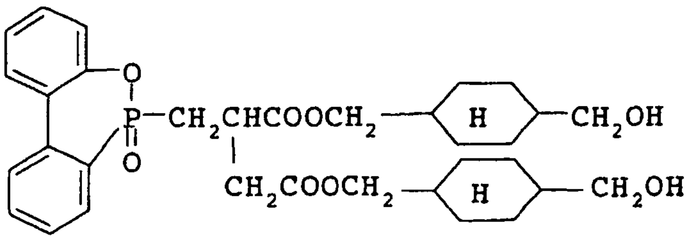

(y)

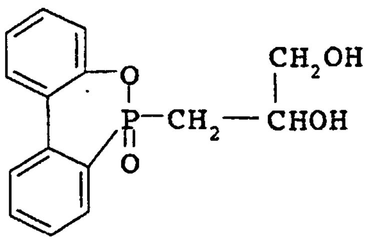

(z)

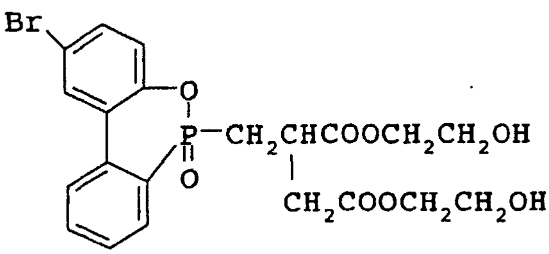

(α)

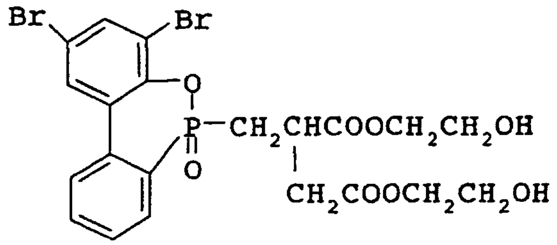

(β)

The copolymerized polyester to be used for the production of the flame-retardant polyester fiber of the present invention can be basically polymerized according to a known method described in, for example, JP-B-55-41610. The flame-retardant polyester fiber can be obtained by melt spinning including discharging a copolymerized polyester from a spinneret of a melt extruder, and taking up the polymer at a speed of 1000 m/min - 4500 m/min, preferably 1500 - 4000 m/min.

A completed yarn is obtained by any of a two-step method comprising spinning and draw-twisting, a one-step method which is a so-called spin-draw method, and a method comprising direct drawing with a non-contact heater after cooling the yarn. As important production conditions, the temperature of a spinneret surface is essentially set for 10°C to 30°C lower than the temperature set for general melt-spinning of polyethylene terephthalate. In general, when the spinning temperature is lowered, the viscosity of the polymer increases and the spinning tension becomes higher. For the production of the flame-retardant fiber of the present invention, it is important to set the intrinsic viscosity of the polymer for 0.58 - 0.63 dl/g and reduce the viscosity during melting in order to make the spinning tension fall within a suitable range. Namely, spinning at a temperature similar to that generally employed for polyethylene terephthalate results in a noticeable decrease in the polymer viscosity, the polymerization degree and the spinning tension. A fiber thus obtained has lower tenacity and is poor in abrasion resistance. When the intrinsic viscosity is higher than 0.63 dl/g, the viscosity during melting becomes high and the tension during spinning becomes higher. As a result, orientation of molecule proceeds and the dyeing property becomes low. Conversely, when it is less than 0.58 dl/g, the spinning tension becomes extremely low, and so does the tenacity, whereby the initial object of the present invention becomes difficult to achieve.

The shear rate of the discharged polymer should be 3000 - 9000 $s^{-1}$ to control molecular orientation and to avoid cutting of yarn. When it is less than 3000 $s^{-1}$, the molecular orientation becomes insufficient in the melting state, and the obtained fiber has lower tenacity and poor abrasion resistance. When the draw ratio is increased with the hope of resolving such defects, the obtained fiber comes to show degraded dyeing property. When it conversely exceeds 9000 $s^{-1}$, soil on the spinneret surface, particularly around orifice, becomes intense. This causes easy occurrence of cut yarn. In either case, the object of the present invention becomes difficult to achieve. The preferable value is 3500 - 8500 $s^{-1}$.

The distance from the spinneret surface to the cooling air outlet should be not more than 80 mm, preferably not more than 70 mm. This is preferable because molecule arrangement of a completed yarn can be lowered by increasing the spinning tension by cooling as soon as possible after the polymer is discharged, thereby allowing the drawing under high deformation speed of the spinning to proceed as much as possible, and decreasing the draw ratio under the low deformation speed in the subsequent drawing step. When it exceeds 80 mm, cooling of the yarn occurs late and the spinning tension becomes lower. Thus, the drawing by spinning does not proceed to make the draw ratio in the drawing step higher, which in turn makes the molecular orientation higher and the dyeing property degraded. This has a consequence that the fiber has a tan δ max of less than 0.250 and the objective fiber of the present invention is difficult to obtain. The temperature for the setting during the drawing step is preferably not less than 155°C. When it is less than 155°C, the setting becomes insufficient and the heat stability is degraded.

A fiber having dyeing property and mechanical property, that are difficult to achieve with a conventional flame-retardant polyester fiber, can be obtained for the first time by employing the aforementioned specific production conditions and the like.

The copolymerized polyester used for the flame-retardant polyester fiber of the present invention has a phosphorus atom content of 500 - 50,000 ppm. When it is less than 500 ppm, the fiber shows poor flame retardancy and makes disperse dyeing at atmospheric pressure difficult. When it exceeds 50,000 ppm, it means that the amount to be copolymerized of the phosphorus compound containing phosphorus atom has been increased. Consequently, the melting point of the polymer becomes dramatically low, making the spinning difficult, and the resulting fiber shows low tenacity, which is not preferable. It is more preferably 1,500 - 30,000 ppm, still preferably 3,000 - 10,000 ppm.

The flame-retardant polyester fiber of the present invention has a tan δ max of not less than 0.1740. When it is less than 0.1740, dyeing property becomes extremely low to the degree that the required level cannot be met. As regards filament, however, the required level of dyeing property is high and the tan δ max needs to be not less than

0.220. When it is less than 0.220, the degree of exhaustion of dye becomes low and so does abrasion resistance, because the region of amorphous part is small and mobility is low. It is preferably not less than 0.230. The upper limit of tan δ max is not particularly limited, but when this value is too high, the crystallinity is greatly destroyed and may affect the tenacity of the yarn. The temperature (Tα) of the tan δ max satisfies the following formula (2):

$$T\alpha - 3.77 \times \ln(dtpf) \leq 137.0 \quad \text{(formula 2)}$$

When the temperature is outside this range, the dyeing property becomes profoundly degraded. It is more preferably not more than 135. While the lower limit is not particularly limited, too low a limit results in poor heat resistance. It is preferably not less than 65.

The flame-retardant polyester fiber of the present invention further satisfies the following formula (3):

$$1.331 \leq SG - \frac{\sqrt{\Delta n}}{8.64} \leq 1.345 \quad \text{(formula 3)}$$

When the value is lower than this range, the molecular orientation degree relative to the degree of crystallinity becomes higher, the amorphous portion becomes dense, and the fiber becomes inferior in dyeing property and abrasion resistance. Conversely, when the value is higher than this range, the degree of molecular orientation relative to the degree of crystallinity becomes too low, which in turn results in superior dyeing property but lower heat stability because shrinkage in boiling water grows as the fiber tenacity decreases. It is more preferably the following range.

$$1.333 \leq SG - \frac{\sqrt{\Delta n}}{8.64} \leq 1.342$$

The elongation at break (DE) is 25% - 45%. When it is less than 25%, abrasion resistance is degraded and the nap is raised during post-processing. When it exceeds 45%, the fiber shows decreased heat stability and dimensional instability because the yarn is unnecessarily drawn by the tension during the knitting and weaving steps.

The flame-retardant polyester fiber of the present invention shows abrasion resistance as expressed by not less than 6500 times of reciprocating motion of a friction block. When it is less than 6500 times, the nap, whitening and the like occur in a post-processing step, whereby the initial object of the present invention becomes difficult to achieve. It is more preferably not less than 6700 times.

The flame-retardant polyester fiber of the present invention preferably shows shrinkage in boiling water (SHW) of not more than 10%, more preferably not more than 9%. When the SHW exceeds 10%, the fiber shows poor heat stability, marked dimensional changes in the subsequent steps, and rough and hard feeling of cloth, which makes the object of the present invention difficult to achieve.

The fiber as used in the present invention includes any form such as filament and staple.

A fiber superior in whiteness, which is one aspect of the flame-retardant polyester fiber of the present invention, shows not less than 67 of an L value as measured with a Hunter's color-difference meter. In this event, a matting agent such as titanium oxide and the like or other matting agent etc. may be added. When the L value of the polyester fiber is less than 67, the fiber is not preferable for a use requesting extremely high whiteness, such as clothing, interior use such as suede raised woven and knitted fabrics to be mentioned later, and the like.

The flame-retardant polyester fiber of the present invention desirably has resistance to hydrolysis in the range of the aforementioned formula (4).

When the resistance to hydrolysis is greater than the range of the formula (4), the tenacity as a fiber or cloth may decrease during passage through subsequent steps such as dyeing and the like, which unpreferably causes poor passage of steps and impaired property of the product.

The copolymerized polyester fiber of the present invention has an optional size of from extremely fine (single yarn fineness of not more than 1 dtex) to extremely thick (single yarn fineness of 100 dtex or above). It may be applied to false-twisting and crimp, and the section of the fiber may be round, tri-lobal, hollow, flat, multi-lobal and the like. Conjugate spinning with other polyester, polyethylene, polyamide and the like is also possible.

One of the preferable uses of the flame-retardant polyester fiber of the present invention is, for example, suede

raised woven and knitted fabrics. In this case, the fiber fineness is set for not more than 1.0 dtex, preferably 0.1 - 0.7 dtex. When the fineness exceeds 1.0 dtex, an improvement in the feeling, which is one of the objects of the present invention, cannot be achieved.

The above-mentioned flame-retardant polyester fiber can be used in at least one part of a woven fabric, or a non-woven fabric. When a suede raised woven, knitted fabric is to be produced, plain weave, twill weave, satin weave and the like are exemplified, preferably satin weave.

The knitted fabric in the present invention is a fabric made by the combination of knit, welt and tuck, and is exemplified by tack stitch, gray sheeting, Mock rodier and the like, with preference given to Mock rodier.

The suede woven and knitted fabrics of the present invention need to be subjected to raising. As a raising method, a typical raising method can be employed and the raising machine may use teasel, card cloth, sand paper and the like, which may be of a wet or dry type.

As the raising machine, a card cloth raising machine is preferable. Of the card cloth raising machines, a complex action type card cloth raising machine is more preferable, wherein a pile roll with a needle pointing toward the direction of cylinder rotation and a counterpile roll with a needle pointing opposite are alternately set. In the case of a knitted fabric, a hydraulic high torque card cloth raising machine is more preferable, and in the case of a woven fabric, a card cloth raising machine that permits positive and reverse rotation of a cylinder is more preferable.

For raising, woven and knitted fabrics may be passed through a raising machine only once, but for uniform raising and improved feeling, stronger raising is successively applied while considering the tenacity of the woven and knitted fabrics, and several repeats or more of the raising is preferably applied. The raising is preferably applied not only to the surface of the woven and knitted fabrics but also to the back thereof.

The suede woven and knitted fabrics of the present invention show strikingly soft feeling as compared to conventional suede woven and knitted fabrics. The fabrics show a coefficient of friction ($\mu$) as measured with a KES-FB4 surface tester known as a KES (Kawabata's Evaluation System for Fabrics) feeling measurement, of within the range of approximately 0.200 - 0.300. It is preferably 0.200 - 0.270, and more preferably, the average value in the knitting direction and the opposite direction is 0.200 - 0.250.

The coefficient of friction ($\mu$) can be defined as follows according to the instruction manual of a KES-FB4 surface tester:

$$\mu = F/P$$

wherein F is a frictional force and P is a standard load of a friction block that presses a cloth specimen.

The $\mu$ value varies during the period when a friction block moves on the surface of cloth. Therefore, an average coefficient of friction $\mu a$ can be defined by the following formula:

$$\mu_a = \frac{1}{L\ \mathrm{max}} \times \int_0^{L\ \mathrm{max}} \mu \cdot dL$$

The variation in the coefficient of friction is shown by average deviation MMD:

$$\mathrm{MMD} = \frac{1}{L\ \mathrm{max}} \times \int_0^{L\ \mathrm{max}} |\mu - \mu_a| \cdot dL$$

As regards the variation in the coefficient of friction (MMD) of the suede woven and knitted fabrics of the present invention, when the degree of variation in the coefficient of friction as compared between that in the knitting direction and that in the opposite direction of a raised woven, knitted fabric as measured with a KES-FB4 surface tester is direction of knitting ≧ the opposite direction, feeling and the touch of the suede woven, knitted fabric is extremely soft. When it is knitting direction < opposite direction, the touch tends to be degraded even if the fabric is soft. Therefore, the variation in the coefficient of friction (MMD) in the knitting direction is preferably made as small as possible.

The correlation between the aforementioned coefficient of friction and the variation thereof as measured with the KES-FB4 surface tester, as well as a touch by human showed appreciable consistency as shown in the following examples.

The woven and knitted fabrics of the present invention do not require an immersion treatment of polyurethane

resin, which is generally applied to a suede woven, knitted fabric, but where necessary, may be subjected to immersion of the polyurethane resin, after which raising is applied.

To exhibit the flame retardancy of the aforementioned raised woven and knitted fabrics, the fabric is desirably subjected to exhaustion processing with 5 - 15% owf of an emulsion and/or dispersion of phosphorus and/or halogen compound in the same bath during the dyeing process after the aforementioned raising processing. As the emulsion and/or dispersion of phosphorus and/or halogen compound, there are mentioned an emulsion and/or aqueous dispersion of phosphoric acid ester such as phosphorus and/or alkyl halide, aryl halide, alkylaryl halide and the like and alicyclic bromide compound, such as hexabromocyclododecane and the like. The raised woven, knitted fabric after exhaustion processing shows not more than 3 seconds of after-flame time by the following test method.

A flame of a lighter is drawn up to the bottom end of a specimen (1.5 cm x 20 cm) stood vertically and the flame is drawn back when the specimen is inflamed. At the same time, the after-flame time of the specimen is measured (n=10 times).

The flame-retardant polyester fiber of the present invention can be combined with a known flame-retardant agent in an attempt to increase the flame retardancy. The combination here means, for example, a method comprising adding a flame-retardant agent during polymer production for copolymerization or blending, a method comprising kneading in of a flame-retardant agent during spinning, a method comprising post-processing the polyester fiber to adhere a flame-retardant agent to the surface of a fiber or permeate the agent into the fiber and the like.

Examples of the blend type flame-retardant agent include halogen flame-retardant agents such as bromine compounds (e.g., tetrabromobisphenol (TBA), decabromodiphenyloxide (DBDPO), hexabromocyclododecane (HBCD), octabromodiphenyloxide, bistribromophenoxyethane (BTBPE), tribromophenol (TBP), ethylenebistetrabromophthalimide, TBA polycarbonate oligomer, polystyrene bromide, TBA epoxy oligomer or polymer, decabromodiphenylethane, polydibromophenyloxide, hexabromobenzene and the like), chlorine compounds such as_ chlorinated paraffin, perchlorocyclopentadecane and the like, and the like. In addition, there are mentioned phosphoric flame-retardant agents such as phosphoric acid esters, halogen-containing phosphoric acid esters, polyphosphate, red phosphorus and the like, silicone flame-retardant agents such as silicone polymer powder and the like, and organic flame-retardant agents such as triazine compound, melanin cyanurate, guanidine compound and the like. Moreover, there are exemplified inorganic flame-retardant agents such as antimony trioxide, aluminum hydroxide, nitrogenized guanidine, antimony pentaoxide, magnesium hydroxide, zinc borate, zirconium compound, calcium aluminate, ammonium phosphate, ammonium carbonate, molybdenum compound, zinc stannate and the like. The above-mentioned flame-retardant agents are not limited to those recited and may be derivatives thereof or analogs. These flame-retardant agents may be used alone or in combination.

The flame-retardant polyester fiber of the present invention can be used for various uses such as suede raised woven and knitted fabrics and the like, as a woven, knitted fabric or a nonwoven fabric. That is, it is applicable to any use in the field requesting flame retardancy, as long as fiber property superior in dyeing property, abrasion resistance, and further, whiteness can be utilized.

The present invention is explained in the following by referring to Examples. The following methods were used for the evaluation in the present invention.

<u>dynamic viscoelasticity</u>

Using Rheovibron (DDV-01FP; Orientech), loss tangent (tan $\delta$) was measured under 110 Hz frequency while elevating the temperature from 20°C to 230°C at a rate of 1°C/min. Based on the maximum value thereof as tan $\delta$ max, the temperature at which the maximum value was shown was taken as T$\alpha$ for evaluation. <u>density; SG</u>

Measured using a density gradient tube containing a mixture of calcium nitrate 4 hydrate and pure water at 30°C, and the average value (n=3) was taken as the density.

<u>birefringence; $\Delta$n</u>

The average value (n=5) as measured with a polarization microscope equipped with a Berek compensator based on the retardation and fiber diameter was taken as this value.

<u>tenacity, elongation; DE</u>

The tenacity and elongation were measured 5 times each by Tensilon (Orientech) under the conditions of gauge length 200 mm and crosshead speed 200 mm/min, and the average values were used for evaluation.

abrasion resistance test

Basically following JIS-L1095 (7.10.2 B method) and using a yarn abrasion tester, a friction block was reciprocated at a load of 0.098 N/tex and abrasion rate of 115 times/min. The number of reciprocation until breakage was measured and evaluated by the average (n=10).

shrinkage in boiling water

A load corresponding to fineness (dtex) x 1/33.3 g was applied, the original yarn was marked at the length of 50.0 cm and wrapped in gauze, after which the fiber was immersed in boiling water for 30 min. After air drying, the same load was applied and the length (L) between the marks was measured, based on which the shrinkage was calculated according to the following formula:

$$SHW\ (\%) = (50-L)/50 \times 100$$

evaluation of flame retardancy

According to JAPAN fire protection law No. 65, evaluated at a limiting oxygen index (LOI).

L*; lightness

Using a spectrocolorimeter (Minolta CM-3700D), L* value was measured 3 times at measurement diameter 8 mmφ, light source D65 and visual field 2°, and the average value was used for the evaluation.

color fastness to light

A specimen was exposed to irradiation with an ultraviolet long life fadometer (FAL-AU/H/BR) at irradiation temperature (BPT);63±3°C for 40 hours to cause color fading by light, which was followed by evaluation of grade according to the gray scale standard.

intrinsic viscosity [IV]

Measured in phenol/1,1,2,2-tetrachloroethane mixed solvent (weight ratio 3:2) at 30°C and the intrinsic viscosity was determined from the relative viscosity by a conventional method.

color tone (L value, b value)

The L value and b value showing the color tone of the polymer are measured by a Hunter's color-difference meter and a greater L value means increased whiteness, and a greater b value means stronger yellowness. This means a greater L value and a smaller b value indicate finer color tone.

content of phosphorus

The fluorescent X-ray derived from the phosphorus atom of the obtained polymer was measured and the content was calculated from the intensity of light emission.

flame retardancy

The limiting oxygen index (LOI value) was measured according to a conventional method for evaluation.

hydrolysis resistance

A drawn yarn was treated in a closed system in pure water at 130°C for 60 min, and the resistance was calculated from the variation in intrinsic viscosity between before and after the treatment, according to the aforementioned formula 2. The sample was a multifilament of 56 dtex 24 filament obtained by drawing a low orientation undrawn yarn melt-spun by a conventional method at the maximum draw ratio of x0.7 and setting the same. The intrinsic viscosity was measured

by the aforementioned method.

KES-FB4 surface test

The measurement conditions were as follows.

Standard load : P = 50 gf
terminal : predetermined balance rod having a friction block whose surface is covered with steel wire having a diameter of 0.5 mm
contact area : 5 mm x 5 mm = 25 mm
terminal movement speed: 1 mm/sec
specimen tension: 200 gf/cm
size of specimen: 20 x 20 cm
sensitivity: SENS 2 x 5
recorder sensitivity: X axis 0.1 V/cm
Y axis 0.5 V/cm

after-flame time

A warp knitted fabric was cut out in 1.5 cm x 20 cm in the warp direction and the weft direction and used as a specimen. A flame of a lighter was drawn up to the bottom end of the specimen stood vertically and the flame was drawn back when the specimen was inflamed. At the same time, the after-flame time of the specimen was measured. The measurement was done 5 times each for the warp direction and the weft direction of the specimen.

**Example 1**

Terephthalic acid as a carboxylic acid component, ethylene glycol as a glycol component and the aforementioned phosphorus-containing compound(s) were copolymerized to give phosphorus atom-containing copolymerized polyester having a phosphorus atom content of 6000 ppm. The obtained polyester was melt-spun at a spinning temperature 262°C, shear rate 6010 $s^{-1}$, take-up speed 1450 m/min and the distance from the spinneret surface to the cooling air outlet 65 mm, after which it was drawn 2.79 times under conventional conditions to give a 167 dtex, 48 filament complete yarn. The obtained yarn was processed to give a tubular knit fabric and subjected to scouring. After air drying, it was dyed with a disperse dye (Dianix Black BG-FS200%; DyStar Japan) under the conditions of bath ratio 1:50, dye density 20% owf at 130°C for 60 min. After drying, the lightness (L*) was measured with a colorimeter and color fastness to light was evaluated. The obtained cloth was superior in dyeing property and color fastness to light, not to mention flame retardancy. It was also superior in abrasion resistance of the yarn (see Table 1).

**Example 2**

In the same manner as in Example 1 except that the shear rate was 4307 $s^{-1}$, take-up speed was 1300 m/min and draw ratio was 2.88 times to give a 56 dtex, 24 filament complete yarn, a cloth was obtained. The obtained cloth was superior in dyeing property and color fastness to light, not to mention flame retardancy. It was also superior in abrasion resistance of the yarn (see Table 1).

**Example 3**

In the same manner as in Example 1 except that the shear rate was 3676 $s^{-1}$, take-up speed was 3000 m/min, distance from the spinneret surface to the cooling air outlet was 35 mm and draw ratio was 1.67 times to give a 84 dtex, 24 filament complete yarn by a spin-draw method, a cloth was obtained. The obtained cloth was superior in dyeing property and color fastness to light, not to mention flame retardancy. It was also superior in abrasion resistance of the yarn (see Table 1).

**Example 4**

In the same manner as in Example 1 except that the phosphorus atom content was 3500 ppm and spinning temperature was 265°C, a 167 dtex, 48 filament complete yarn was obtained. The obtained cloth was superior in dyeing property and color fastness to light, not to mention flame retardancy. It was also superior in abrasion resistance of the yarn (see Table 1).

**Example 5** (comparative)

In the same manner as in Example 1 except that the draw ratio for drawing was 3.4 times, a complete yarn was obtained. The obtained yarn was superior in flame retardancy, dyeing property and color fastness to light, but inferior in abrasion resistance. In addition, nap was produced during knitting and the problem of difficult knitting remained (see Table 1).

**Example 6**

In the same manner as in Example 1 except that the draw ratio for drawing was 2.1 times, a complete yarn was obtained. The obtained yarn was superior in flame retardancy, dyeing property, abrasion resistance and color fastness to light, but showed dimensional changes due to the tension during knitting. Thus, the problem of inferior knitting property remained (see Table 1).

**Example 7**

In the same manner as in Example 1 except that the setting temperature during drawing was 145°C, a complete yarn was obtained. The obtained cloth was superior in flame retardancy, dyeing property, abrasion resistance and color fastness to light, but showed poor dimensional stability against heat, and after dyeing, it showed rough and hard feeling, thus leaving a problem (see Table 1).

**Example 8**

In the same manner as in Example 1 except that the spinning temperature was 262°C, shear rate was 8417 $s^{-1}$, take-up speed was 2450 m/min, distance from the spinneret surface to the cooling air outlet was 25 mm, preheated roller temperature was 85°C, set roller temperature was 150°C and draw ratio was 1.63 to give a 100 dtex, 216 filament complete yarn by spin-draw method, a cloth was obtained. The obtained cloth was superior in dyeing property and color fastness to light, not to mention flame retardancy. It was also superior in abrasion resistance of the yarn (see Table 1).

**Example 9**

A polymer was delivered from a 4350 hole spinneret at a spinning temperature 265°C, and spun at a take-up speed 1263 m/min. The obtained 14486 dtex tow was drawn-set, crimped with a crimper and cut to give a short fiber. After opening, it was subjected to carding to give a card web having a single fiber fineness 1.7 dtex and average fiber length 5.1 mm. The obtained short fiber had a tenacity of 4.61 cN/dtex, elongation of 27.5%, tan $\delta$ max of 0.1745, $T\alpha$ of 135.5°C, density of 1.3841 g/$cm^3$ and $\Delta n$ of 0.166. The obtained web was extremely superior in flame retardancy.

**Comparative Example 1**

In the same manner as in Example 1 except that a phosphorus atom-containing copolymerized polyester having a phosphorus atom content of 300 ppm was used and the spinning temperature was 269°C, a complete yarn was obtained. The obtained yarn was superior in dyeing property and flame retardancy (see Table 1).

**Comparative Example 2**

In the same manner as in Example 1 except that a phosphorus atom-containing copolymerized polyester having a phosphorus atom content of 60000 ppm was used, the spinning temperature was 260°C and draw ratio was 2.59 times, a complete yarn was obtained. The yarn was frequently cut during spinning and drawing, and was problematic in operability. The obtained yarn was superior in dyeing property and flame retardancy but inferior in tenacity and abrasion resistance (see Table 1).

**Comparative Example 3**

In the same manner as in Example 1 except that the distance from the spinneret surface to the cooling air outlet was 120 mm and draw ratio was 2.92 to give a complete yarn, a cloth was obtained. The obtained fiber showed a low tan $\delta$ max of 0.237, and the obtained cloth was inferior in dyeing property (see Table 1).

**Comparative Example 4**

In the same manner as in Example 1 except that the shear rate was 2161 $s^{-1}$, a complete fiber was obtained. The obtained fiber showed a low tan δ max of 0.231 and was inferior in tenacity and abrasion resistance (see Table 1).

**Comparative Example 5**

In the same manner as in Example 1 except that the shear rate was 12603 $s^{-1}$, spinning was tried. However, the yarn was frequently cut during spinning and a fiber was not obtained (see Table 1).

**Comparative Example 6**

In the same manner as in Example 1 except that (2-carboxyethyl)methylphosphine acid was used as the phosphorus atom-containing compound to give a complete yarn, a cloth was obtained. The obtained fiber showed a low tan δ max of 0.230, and the cloth was inferior in dyeing property. Moreover, the yarn showed inferior abrasion resistance (see Table 1).

**Example 10** (comparative)

In a stainless autoclave equipped with a stirrer, a distillation column and a pressure regulator were charged terephthalic acid (1242 parts), phosphorus compound (x) (117 parts, as 50% ethylene glycol solution) and ethylene glycol (850 parts), and antimony trioxide (24.1 parts, as 14 g/L ethylene glycol solution), germanium dioxide (15 parts, as 8 g/L ethylene glycol solution), triethylamine (5.2 parts), and titanium dioxide (22 parts, as 23.5% ethylene glycol solution) were added. While removing water generated during esterification, the esterification reaction was conducted at 230°C, gauge pressure 2.5 kg/$cm^2$ for 2 h. Then, cobalt acetate 4 hydrate (9.6 parts, as 20 g/L ethylene glycol solution) was added and the temperature of the system was raised to 275°C over 1 h, during which period the pressure of the system was gradually reduced to 0.1 mmHg and under these conditions, condensation polymerization was carried out for 1 h. The obtained polymer had an intrinsic viscosity of 0.65 and a phosphorus content of 3500 ppm. This polymer was spun and drawn by a conventional method and the obtained 56 dtex, 24 filament (tan δ max: 0.252, Tα: 130.3°C, density: 1.3785 g/$cm^3$, Δn: 0.119) was prepared into a knit sample. The spinning operability was fine. The %B.B. showing the flame retardancy and resistance to hydrolysis and color tone were measured. The results are shown in Table 2.

**Example 11** (comparative)

In the same manner as in Example 9 except that the amount of catalyst was changed as shown in Table 1 and a fluorescent brightener (HostaluxKS: Clariant, 16.5 parts, as 2 wt% ethylene glycol solution) was added after esterification, the same operation as in Example 1 was performed. The results are shown in Table 2. The spinning operability was fine.

The obtained fiber showed tan δ max of 0.251, Tα of 130.1°C, density of 1.3787 g/$cm^3$, and Δn of 0.122.

**Example 12**

In the same manner as in Example 9 except that the phosphoric content was changed to the value corresponding to phosphorus atom of 6000 ppm and a fluorescent brightener (HostaluxKS: Clariant, 16.5 parts, as 2 wt% ethylene glycol solution) was added after esterification, the same operation as in Example 1 was performed. The results are shown in Table 2. The spinning operability was fine.

The obtained fiber showed tan δ max of 0.267, Tα of 128.9°C, density of 1.3777 g/$cm^3$, and Δn of 0.110.

**Example 11**

In the same manner as in Example 9 except that the kind of phosphorus, phosphoric content and the catalyst amount were changed as shown in Table 2 and a fluorescent brightener (HostaluxKS: Clariant, 16.5 parts, as 2 wt% ethylene glycol solution) was added after esterification, the same operation as in Example 1 was performed. The results are shown in Table 1. The spinning operability Was fine.

The obtained fiber showed tan δ max of 0.262, Tα of 129.0°C, density of 1.3773 g/$cm^3$, and Δn of 0.122.

### Example 12

The aforementioned compound S was used as a phosphorus-containing compound and terephthalic acid and ethylene glycol were used as starting materials for polymerization wherein the phosphorus atom content was 6,000 ppm. Using the obtained phosphorus-containing copolymerized polyester, multifilaments of the phosphorus-containing polyester superfine fiber having a single fiber fineness of 0.36 dtex (tan δ max: 0.223, Tα: 120.1°C, density: 1.3735 g/cm$^3$, Δn: 0.109), 0.46 dtex (tan δ max: 0.236, Tα: 121.8°C, density: 1.3716 g/cm$^3$, Δn: 0.118) and 0.65 dtex (tan δ max: 0.253, Tα: 122.0°C, density: 1.3716 g/cm$^3$, Δn: 0.107) were obtained. These multifilaments were double-twisted into a total fineness of 167 dtex and a Mock rodier tubular knitted fabric was obtained, which included these phosphorus-containing polyester superfine fibers as a pile part and regular polyethylene terephthalate fibers (multifilament of single fiber having fineness 2.2 dtex, 56 dtex) as a ground part. The knitting conditions were number of needles 28 gauge, knitting diameter 33 inch, pile part/ground part = 35/65 (weight ratio). The weight of the cloth per meter was 500 g.

For comparison, a Mock rodier tubular knitted fabric was obtained, which included multifilaments of regular polyethylene terephthalate (0.36 dtex) as the pile part. The knitted fabric was dyed with disperse dyes (Foron Yellow Brown 1.0% owf, Foron Red RDGL 0.3% owf, Foron Navy S2GL 1.2% owf, Clariant Japan), a dispersing agent (IONET RAP Sanyo Chemical Industries, 0.5 cc/l), and acetic acid (80% solution, 0.5 cc/l), at a bath ratio 1:30 and dyeing temperature 130°C for 60 min, after which it was allowed to cool, washed and dried.

The obtained dyed knitted fabric was subjected to raising of both surfaces (application of raising: front 8 times, back 2 times) using a hydraulic raising machine (NIKKISO Co., Ltd.). The obtained raised knitted fabric was applied to measurement with a surface tester KES-FB4, the results of which are shown in Table 3.

The feeling was evaluated by 10 panelists by rating each knitted fabric as superior ◎, fine O, rather inferior Δ or inferior ×.

The raised knitted fabric of the present invention showed lower coefficient of friction in both knitting direction and opposite direction as compared to Comparative Example using a regular polyethylene terephthalate fiber. It is clear that the variation in the coefficient of friction is small between the knitting direction and the opposite direction, wherein a smaller variation in the opposite direction means more superior feeling.

### Example 13

Using a 3-reed 28G tricot warp knitting machine, a compound of the chemical formula (S) as a phosphorus-containing compound, and terephthalic acid and ethylene glycol were used as starting materials for polymerization wherein the phosphorus atom content was 6,000 ppm. The obtained phosphorus-containing copolymerized polyester was spun, and the obtained 84 dtex/72f (tan δ max: 0.253, Tα: 126.7°C, density: 1.3774 g/cm$^3$, Δn : 0.116) and 56 dtex/24f (tan δ max: 0.257, Tα: 128.7°C, density: 1.3770 g/cm$^3$, Δn: 0.105) were set on all reeds and knitted under the following conditions.

Font reed: 84 dtex 72f 1-0/3-4
Middle reed: 56 dtex 24f 1-0/2-3
Middle reed: 56 dtex 24f 1-0/1-2
Surface knit density: 72 course × 28 wale
knitting width : 267 cm

This grey fabric was subjected to raising, relax scouring, dyeing, drying, finish setting to give a raised dyed finished warp knitted fabric having finish width 150 cm, finish density 68 course x 47 wale.

In the above-mentioned dyeing step, the fabric was exhausted with an emulsion of 10% owf amount of phosphorus, halogen compound in the same bath. The obtained warp knitted fabric was measured for the after-flame time to examine flame retardancy. As a result, the fabric showed 0 sec, 0 sec, 0 sec, 0.6 sec and 0.4 sec in the warp direction and 0.4 sec, 0 sec, 0.6 sec, 0.8 sec and 0 sec in the weft direction.

### Example 14

In the same manner as in Example 12, 70 dtex/108f (tan δ max: 0.222, Tα: 120.3°C, density: 1.3738 g/cm$^3$, Δn: 0.112), and 33 dtex/24f (tan δ max: 0.252, Tα: 126.3°C, density: 1.3778 g/cm$^3$, Δn: 0.118) were obtained using a 2-reed 32G tricot warp knitting machine, and set on all the reeds for knitting under the following conditions:

Front reed: 70 dtex 108f 1-0/3-4
Middle reed: 33 dtex 24f 1-0/2-3
Fabric density: 90 course × 32 wale

knitting width: 329 cm

This grey fabric was subjected to raising, relax scouring, dyeing, drying, finish setting to give a raised dyed finished warp knitted fabric having finish width 150 cm, finish density 80 course × 67 wale.

In the above-mentioned dyeing step, the fabric was exhausted with an emulsion of 10% owf amount of phosphorus, halogen compound in the same bath. The obtained warp knitted fabric was measured for the after-flame time to examine flame retardancy. As a result, the fabric showed 0 sec, 0 sec, 0 sec, 0 sec and 0.4 sec in the warp direction and 0.4 sec, 0 sec, 0 sec, 0.6 sec and 0.7 sec in the weft direction.

According to the present invention, a flame-retardant polyester fiber superior in dyeing property, abrasion resistance and heat stability and having stable flame retardancy for a long time, as well as a flame-retardant polyester fiber having high flame retardancy, fine whiteness and resistance to hydrolysis can be produced economically and efficiently. The raised woven and knitted fabrics using the fiber show soft surface touch, have high-grade suede appearance and superior durability against friction, abrasion and the like, and therefore, can be widely applied to various uses in interior field, clothing field and the like, such as automobile, upholstery in automobile, decoration purposes, toy, furniture, footwear, bag, shoes, bag, belt, gloves, binding and the like. In addition, the flame-retardant polyester fiber of the present invention can be used for clothing such as clothes, night clothes and the like, interior products such as curtain, blind, wallpaper and the like, industrial materials such as safety net, aging sheet, mesh sheet for construction, sheet for construction and the like, bed clothes such as fabric, cotton pad and the like, products for fire prevention such as blanket, tent, sheet, curtain, hood for fire prevention, cover of chair, automobile body cover and the like, office products such as partition cloth, artificial tree and the like, domestic electrical goods such as grille cloth for speakers and the like, railroad car supplies such as fabric for seat, curtain, screen and the like, automobile equipment such as fabric for seat, curtain and the like, blanket, filter for air conditioning and the like for seacraft and airplane, and the like, and is industrially extremely valuable.

Table 1

| | | Ex.1 | Ex.2 | Ex.3 | Ex.4 | (comparative) Ex.5 | Ex.6 | Ex.7 | Ex.8 | Comp. Ex.1 | Comp. Ex.2 | Comp. Ex.3 | Comp. Ex.4 | Comp. Ex.5 | Comp. Ex.6 |
|---|---|---|---|---|---|---|---|---|---|---|---|---|---|---|---|
| polymer | phosphorus compound | side chain type | side chain type | side chain type | side chain type | side chain type | side chain type | side chain type | side chain type | side chain type | side chain type | side chain type | side chain type | side chain type | main chain type |
| | phosphorus atom content (ppm) | 6000 | 6000 | 6000 | 3500 | 6000 | 6000 | 6000 | 6000 | 300 | 60000 | 6000 | 6000 | 6000 | 6000 |
| | intrinsic viscosity | 0.605 | 0.605 | 0.605 | 0.605 | 0.605 | 0.605 | 0.605 | 0.605 | 0.610 | 0.560 | 0.605 | 0.605 | 0.605 | 0.605 |
| spinning conditions | spinning temperature (°C) | 262 | 262 | 262 | 265 | 262 | 262 | 262 | 262 | 269 | 260 | 262 | 262 | 262 | 262 |
| | shear rate ($s^{-1}$) | 6010 | 4307 | 3676 | 6010 | 7067 | 4369 | 6010 | 8417 | 6010 | 6010 | 6010 | 2161 | 12603 | 6010 |
| | cooling start distance (mm) | 65 | 35 | 65 | 65 | 65 | 65 | 65 | 25 | 65 | 65 | 120 | 65 | 65 | 65 |
| | take-up speed (m/min) | 1450 | 1300 | 3000 | 1450 | 1450 | 1450 | 1450 | 2450 | 1450 | 1450 | 1450 | 1450 | 1450 | 1450 |
| drawing conditions | preheating temperature (°C) | 80 | 80 | 100 | 80 | 80 | 80 | 80 | 85 | 80 | 80 | 80 | 80 | 80 | 80 |
| | setting temperature (°C) | 160 | 160 | 160 | 160 | 160 | 160 | 145 | 150 | 160 | 160 | 160 | 160 | 160 | 160 |
| | draw ratio | 2.79 | 2.88 | 1.67 | 2.79 | 3.40 | 2.10 | 2.79 | 1.63 | 2.79 | 2.59 | 2.92 | 2.92 | - | 2.79 |
| properties of original fiber | fineness (dtex) | 167 | 56 | 84 | 167 | 167 | 167 | 167 | 100 | 167 | 167 | 167 | 167 | - | 167 |
| | number of filaments | 48 | 24 | 24 | 48 | 48 | 48 | 48 | 216 | 48 | 48 | 48 | 48 | - | 48 |
| | tanδmax | 0.259 | 0.258 | 0.258 | 0.253 | 0.253 | 0.258 | 0.266 | 0.236 | 0.200 | 0.291 | 0.237 | 0.231 | - | 0.230 |
| | Tα (°C) | 129.0 | 128.8 | 128.1 | 130.8 | 129.8 | 127.4 | 128.2 | 122.1 | 133.9 | 124.9 | 132.3 | 130.2 | - | 133.9 |
| | Δn | 0.120 | 0.108 | 0.099 | 0.121 | 0.132 | 0.110 | 0.101 | 0.118 | 0.146 | 0.074 | 0.134 | 0.138 | - | 0.152 |
| | SG ($g/cm^3$) | 1.3770 | 1.3772 | 1.3699 | 1.3788 | 1.3802 | 1.3769 | 1.3687 | 1.3718 | 1.3745 | 1.3778 | 1.3780 | 1.3780 | - | 1.3755 |
| | $SG-\sqrt{\Delta n}/8.64$ | 1.337 | 1.339 | 1.333 | 1.339 | 1.338 | 1.339 | 1.332 | 1.332 | 1.330 | 1.346 | 1.336 | 1.335 | - | 1.330 |
| | strength at break (cN/dtex) | 4.15 | 4.29 | 3.82 | 4.25 | 4.46 | 3.34 | 4.11 | 4.05 | 4.35 | 3.55 | 4.18 | 4.22 | - | 4.22 |
| | elongation at break;DE (%) | 32.3 | 32.7 | 34.2 | 32.8 | 12.6 | 64.1 | 32.5 | 34.7 | 31.9 | 33.0 | 33.5 | 34.0 | - | 34.3 |
| | SHW (%) | 8.5 | 8.6 | 9.3 | 8.2 | 10.2 | 7.8 | 12.3 | 6.9 | 7.9 | 11.1 | 9.3 | 9.3 | - | 9.1 |
| | LOI | 29.0 | 29.1 | 29.2 | 27.8 | 28.9 | 29.0 | 29.1 | 29.0 | 23.4 | 34.2 | 28.9 | 29.2 | - | 29.2 |
| | abrasion resistance (times) | 8730 | 8239 | 8188 | 10147 | 6120 | 8844 | 8545 | 7720 | 13290 | 5834 | 8765 | 6403 | - | 6403 |
| | L* value | 15.3 | 15.2 | 15.1 | 15.4 | 15.3 | 15.2 | 15.2 | 15.3 | 16.5 | 14.8 | 15.2 | 15.4 | - | 16.1 |
| | color fastness to light (grade) | 4-5 | 4-5 | 4-5 | 4-5 | 4-5 | 4-5 | 4-5 | 4 | 5 | 3-4 | 4-5 | 4-5 | - | 4-5 |
| | Note | | | spin-draw method | | occurrence of nep during knitting | dimensional change during knitting | low dimensional stability | spin-draw method | | frequent cutting of fiber | | | spining not possible | |

**Table 2**

| | phosphorus compound | | amount of polymenzation catalyst (ppm) | | | | fluorescent brightener | polymer property | | | flame retardancy | hydrolysis resistance |
|---|---|---|---|---|---|---|---|---|---|---|---|---|
| | kind | amount (ppm) | G | S | C | S+ 2G+C | amount (ppm) | IV (dl/g) | L | b | LOI | %B.B |
| Ex. 10 (comparative) | (x) | 3500 | 75 | 188 | 30 | 368 | - | 0.65 | 71.1 | 3.59 | 27 | 0.3 |
| Ex. 11 (comparative) | (x) | 3500 | 75 | 150 | 15 | 355 | 220 | 0.64 | 73.9 | -0.75 | 27 | 0.33 |
| Ex. 12 | (x) | 6000 | 75. | 188 | 30 | 365 | 220 | 0.61 | 70.8 | 0.5 | 28 | 0.35 |
| Ex. 13 | (Y) | 6000 | 75 | 150 | - | 300 | 220 | 0.63 | 73.3 | -0.52 | 28 | 0.43 |

## Claims

1. A flame-retardant polyester fiber comprising a side chain, type phosphorus compound copolymerized polyester comprising ethylene terephthalate units in a proportion of not less than 80 mol%, which satisfies the following formulas (1) - (3) and which has a phosphorus atom content of 500-50,000 ppm and an intrinsic viscosity of 0.58 to 0.63 dl/g

$$\tan\delta_{max} \geq 0.1740 \qquad \text{(formula 1)}$$

$$T\alpha - 3.77 \times \ln(\text{dtpf}) \leq 137.0 \qquad \text{(formula 2)}$$

$$1.331 \leq SG - \frac{\sqrt{\Delta n}}{8.64} \leq 1.345 \qquad \text{(formula 3)}$$

wherein $\tan\delta_{max}$ is a maximum value of loss tangent in a dynamic viscoelasticity measurement, $T\alpha$ is a temperature at which loss tangent reaches the maximum, dtpf is single fiber fineness (dtex), SG is density (g/cm$^3$), and $\Delta n$ is birefringence, said fiber being **characterized by** an abrasion resistance of not less than 6500 times of reciprocation of a friction block up to an occurrence of cutting by abrasion under a load of 0.098 N/tex in a yarn abrasion test and a tensile elongation at break (DE) of 25-45%.

2. The flame-retardant polyester fiber of claim 1, which comprises a copolymerized polyester obtained by adding a phosphorus compound of the following formula (1):

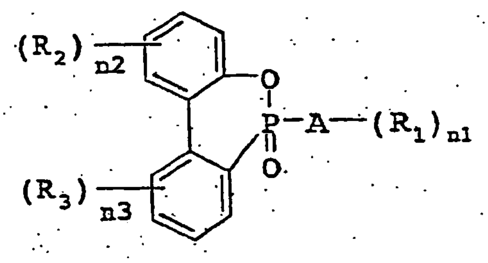

(1)

wherein $R_1$ is a monovalent ester-forming functional group, $R_2$ and $R_3$ are the same or different and each is selected from a halogen atom, a hydrocarbon group having 1 to 10 carbon atoms and $R_1$, A is a divalent or trivalent organic residue, n1 is 1 or 2 and n2 and n3 are each an integer of 0 to 4.

3. The flame-retardant polyester fiber of claim 1, which shows a shrinkage in hot water (sHW) of not more than 10%.

4. The flame-retardant polyester fiber of claim 1, which satisfies the following formula 4, wherein a L value is not less than 67 and a b value is not more than 10.00 as measured with a Hunter's color-difference meter:

$$\%B.B. < 0.5 \qquad \text{(formula 4)}$$

wherein %B.B. is a proportion of ester bond broken upon immersion in a closed system in pure water at 130°C for 6 h, which can be determined by the following formula (5) wherein an intrinsic viscosity before immersion is $[\eta]_i$ and that after immersion is $[\eta]_f$, and the intrinsic viscosity is determined in a mixed solvent of phenol/1,1,2,2-tetrachloroethane (weight ratio 3/2) at 30°C:

$$\%B.B. = 0.244 \times \{[\eta]_F^{-1.471} - [\eta]_I^{-1.471}\} \quad \text{(formula 5)}.$$

5. The flame-retardant polyester fiber of claim 1, wherein the phosphorus compound copolymerized polyester comprises an organic fluorescent brightener in a proportion of 0.01-1 wt% and, as a polymerization catalyst, an antimony compound, a germanium compound and a cobalt compound in amounts that simultaneously satisfy the following formulas (6)-(9):

$$30 \le S \le 400 \quad \text{(formula 6)}$$

$$10 \le G \le 100 \quad \text{(formula 7)}$$

$$5 \le C \le 40 \quad \text{(formula 8)}$$

$$200 \le S+2G+C \le 400 \quad \text{(formula 9)}$$

wherein S, G and C are each a content (ppm) of an antimony atom, germanium atom or cobalt atom relative to the polyester.

6. flame-retardant polyester woven, knitted fabric comprising the flame-retardant polyester fiber of claim 1 at least in a part thereof.

7. A suede raised woven, knitted fabric, which is a raised woven, knitted fabric comprising the flame-retardant polyester woven, knitted fabric of claim 6 that underwent a raising treatment, and which shows a coefficient of friction of a surface of the woven, knitted fabric by a surface tester KES-FB4 of 0.200-0.300.

8. A flame-retardant polyester raised warp knitted fabric, which is a raised woven, knitted fabric comprising the flame-retardant polyester woven, knitted fabric of claim 6 that underwent a raising treatment, and which shows an after-flame time of not more than 3 sec as measured by the following test method:

   a flame of a lighter is drawn up to a bottom end of a specimen (1.5 cm x 20 cm) stood vertically and the flame is drawn back when the specimen is inflamed, along with which the after-flame time of the specimen is measured.

9. A flame-retardant polyester nonwoven fabric comprising the flame-retardant polyester fiber of claim 1 at least in a parts thereof,

**Patentansprüche**

1. Flammverzögernde Polyesterfaser, umfassend einen Polyester, der mit einer Phosphorverbindung vom Seitenkettentyp copolymerisiert ist, umfassend Ethylenterephthalateinheiten in einem Anteil von nicht weniger als 80 mol%, welche den folgenden Formeln (1) - (3) genügt und welche einen Phosphoratomgehalt von 500 - 50.000 ppm und eine innere Viskosität von 0,58 bis 0,63 dl/g hat,

$$\tan \delta_{max} \ge 0.1740 \quad \text{(Formel 1)}$$

$$T\alpha - 3.77 \times \ln(dtpf) \le 137.0 \quad \text{(Formel 2)}$$

$$1.331 \le SG - \frac{\sqrt{\Delta n}}{8.64} \le 1.345 \quad \text{(Formel 3)}$$

wobei tan $\delta_{max}$ ein Maximalwert der Verlusttangente in einer dynamischen Viskoelastizitätsmessung, $T\alpha$ eine Temperatur, bei welcher die Verlusttangente das Maximum erreicht, dtpf der Feinheitsgrad einer Einzelfaser (dtex), SG die Dichte (g/cm$^3$) und $\Delta n$ die Doppelbrechung ist, wobei die Faser durch eine Abriebfestigkeit von nicht weniger als 6500 Hin- und Herbewegungen eines Reibeblocks bis zum Eintritt des Schneidens durch Verschleiß unter einer Belastung von 0,098 N/tex in einem Garnabriebtest und eine Zugbruchdehnung beim Bruch (DE) von 25 - 45% **gekennzeichnet** ist.

**2.** Flammverzögernde Polyesterfaser nach Anspruch 1, welche einen copolymerisierten Polyester, erhalten durch Zugabe einer Phosphorverbindung der folgenden Formel (1) :

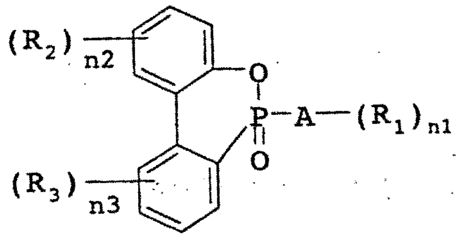

(1)

umfasst, wobei $R_1$ ein monovalenter esterbildender funktioneller Rest ist, $R_2$ und $R_3$ gleich oder verschieden sind und jeweils ausgewählt sind aus einem Halogenatom, einem Kohlenwasserstoffrest mit 1 bis 10 Kohlenstoffatomen und $R_1$, A ein divalenter oder trivalenter organischer Rest ist, n1 1 oder 2 ist und n2 und n3 jeweils eine ganze Zahl von 0 bis 4 sind.

**3.** Flammverzögernde Polyesterfaser nach Anspruch 1, welche eine Schrumpfung in heißem Wasser (SHW, engl.: shrinkage in hot water) von nicht mehr als 10% zeigt.

**4.** Flammverzögernde Polyesterfaser nach Anspruch 1, welche der folgenden Formel 4 genügt, wobei ein L-Wert nicht kleiner als 67 und ein b-Wert nicht größer als 10,00 ist, wie mit einem Hunter-Farbdifferenzmessgerät gemessen:

$$\%B.B. < 0.5 \quad \text{(Formel 4)}$$

wobei %B.B. ein Anteil an gebrochenen Esterbindungen nach Eintauchen in reines Wasser bei 130°C für 6 Stunden in einem geschlossenen System ist, welches nach der folgenden Formel (5) bestimmt werden kann, wobei eine innere Viskosität vor dem Eintauchen $[\eta]_i$ und nach dem Eintauchen $[\eta]_f$ ist und eine innere Viskosität in einem gemischten Lösungsmittel aus Phenol / 1,1,2,2-Tetrachlorethan (Gewichtsverhältnis 3/2) bei 30°C bestimmt wird:

$$\%B.B. = 0.244 \times \{[\eta]_f^{-1.471} - [\eta]_i^{-1.471}\} \text{ (Formel 5).}$$

**5.** Flammverzögernde Polyesterfaser nach Anspruch 1, wobei der Polyester, der mit einer Phosphorverbindung copolymerisiert ist, einen organischen Fluoreszenzaufheller in einem Anteil von 0,01 - 1 Gew.-% und als Kondensationspolymerisations-Katalysator eine Antimon-, eine Germanium- und eine Kobaltverbindung umfasst, in Mengen welche gleichzeitig den folgenden Formeln (6) - (9) genügen:

$$30 \leq S \leq 400 \qquad \text{(Formel 6)}$$

$$10 \leq G \leq 100 \qquad \text{(Formel 7)}$$

$$5 \leq C \leq 40 \qquad \text{(Formel 8)}$$

$$200 \leq S+2G+C \leq 400 \qquad \text{(Formel 9)}$$

wobei S, G und C jeweils ein Gehalt (ppm) eines Antimon-, Germanium-, oder Kobaltatoms relativ zum Polyester ist.

**6.** Flammverzögernde gewebte, gestrickte Polyestertextilware, umfassend, zumindest in einem Teil davon, die flammverzögernde Polyesterfaser nach Anspruch 1.

**7.** Wildlederartige, gerauhte, gewebte, gestrickte Textilware, welche eine gerauhte gewebte, gestrickte Textilware umfassend die flammverzögernde gewebte, gestrickte Polyestertextilware nach Anspruch 6 ist, welche einer Aufrauhungsbehandlung unterzogen wurde, und welche einen Reibungskoeffizienten der Oberfläche einer gewebten, gestrickten Textilware von 0,200 - 0,300 mit einem Oberflächentestgerät KES-FB4 zeigt.

**8.** Flammverzögernde, gerauhte, kettengewirkte Polyestertextilware, welche eine gerauhte gewebte, gestrickte Textilware umfassend die flammverzögernde gewebte, gestrickte Polyestertextilware nach Anspruch 6 ist, welche einer Aufrauhungsbehandlung unterzogen wurde, und welche eine Nachflammzeit von nicht mehr als 3 Sekunden zeigt, gemessen durch die folgende Testmethode:

eine Flamme eines Feuerzeugs wird an das untere Ende eines vertikalen Teststücks (1,5 cm x 20 cm) gehalten und die Flamme wird weggezogen wenn das Teststück entflammt ist, und die Nachflammzeit des Musters wird gemessen.

**9.** Flammverzögerndes Polyestervlies, umfassend, zumindest in einem Teil davon, die flammverzögernde Polyesterfaser nach Anspruch 1.

**Revendications**

**1.** Fibre de polyester anti-feu comprenant un polyester copolymérisé avec un composé à base de phosphore de type chaîne latérale comprenant des unités de téréphtalate d'éthylène dans une proportion non inférieure à 80 % en moles, qui est conforme aux formules (1) à (3) suivantes et qui présente une teneur en atomes de phosphore de 500 à 50 000 ppm et une viscosité intrinsèque de 0,58 à 0,63 dl/g

$$\tan \delta_{max} \geq 0{,}1740 \qquad \text{(formule 1)}$$

$$T\alpha - 3{,}77 \times \ln(\text{dtpf}) \leq 137{,}0 \qquad \text{(formule 2)}$$

$$1{,}331 \leq SG - \frac{\sqrt{\Delta n}}{8{,}64} \leq 1{,}345 \qquad \text{(formule 3)}$$

où tan $\delta_{max}$ correspond à une valeur maximale de la tangente de perte dans une mesure de la viscoélasticité dynamique, $T\alpha$ correspond à une température à laquelle la tangente de perte atteint son maximum, dtpf correspond

à la finesse (dtex) d'une seule fibre, SG correspond à la densité (g/cm$^3$) et $\Delta n$ correspond à la biréfringence, ladite fibre étant **caractérisée par** une résistance à l'abrasion n'étant pas inférieure à 6 500 fois le va-et-vient d'un bloc de friction jusqu'à occurrence d'une rupture par abrasion sous une charge de 0,098 N/tex dans le cadre d'un essai d'usure du fil et par une élongation sous tension jusqu'à la rupture (DE) de 25 à 45 %.

**2.** Fibre de polyester anti-feu selon la revendication 1, qui comprend un polyester copolymérisé obtenu en ajoutant un composé à base de phosphore de la formule (1) suivante :

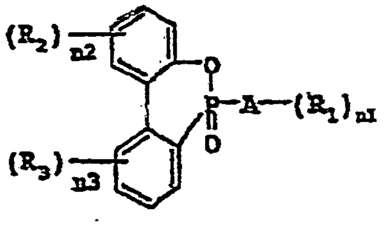

(1)

dans laquelle $R_1$ représente un groupe fonctionnel formant ester monovalent, $R_2$ et $R_3$ sont identiques ou différents et chacun est choisi parmi un atome d'halogène, un groupe hydrocarbure comportant de 1 à 10 atomes de carbone et $R_1$, A représente un résidu organique divalent ou trivalent, n1 est égal à 1 ou 2 et n2 et n3 correspondent chacun à un nombre entier de 0 à 4.

**3.** Fibre de polyester anti-feu selon la revendication 1, qui présente un retrait dans l'eau chaude (SHW) ne dépassant pas 10 %

**4.** Fibre de polyester anti-feu selon la revendication 1, qui est conforme à la formule 4 suivante, dans laquelle une valeur L n'est pas inférieure à 67 et une valeur b n'est pas supérieure à 10,00, comme mesuré au moyen d'un appareil pour mesurer des différences de couleur Hunter :

$$\% \text{ B.B.} < 0{,}5 \quad \text{(formule 4)}$$

où % B.B. correspond à une proportion de liaisons esters rompues suite à l'immersion dans un système fermé dans de l'eau pure à 130°C pendant 6 heures, qui peut être déterminée par la formule (5) suivante dans laquelle une viscosité intrinsèque avant immersion est $[\eta]_i$ et après immersion est $[\eta]_f$, et la viscosité intrinsèque est déterminée dans un solvant mixte de phénol/1,1,2,2-tétrachloroéthane (rapport pondéral 3/2) à 30°C :

$$\% \text{ B.B.} = 0{,}244 \times \{[\eta]_f^{-1{,}471} - [\eta]_i^{-1{,}471}\} \quad \text{(formule 5)}$$

**5.** Fibre de polyester anti-feu selon la revendication 1, dans laquelle le polyester copolymérisé avec le composé à base de phosphore comprend un brillanteur fluorescent organique dans une proportion de 0,01 à 1 % en poids et, en tant que catalyseur de polycondensation, un composé à base d'antimoine, un composé à base de germanium et un composé à base de cobalt en des quantités simultanément conformes aux formules (6) à (9) suivantes :

$$30 \le S \le 400 \quad \text{(formule 6)}$$

$$10 \le G \le 100 \quad \text{(formule 7)}$$

$$5 \le C \le 40 \quad \text{(formule 8)}$$

$$200 \leq S + 2G + C \leq 400 \qquad \text{(formule 9)}$$

dans lesquelles les lettres S, G et C correspondent chacune à une teneur (ppm) en atomes d'antimoine, en atomes de germanium ou en atomes de cobalt par rapport au polyester.

**6.** Tissu tissé tricoté en polyester anti-feu comprenant, au moins pour partie, la fibre de polyester anti-feu selon la revendication 1.

**7.** Tissu en suédine gratté, tissé, tricoté qui est un tissu gratté, tissé, tricoté comprenant le tissu tissé, tricoté en polyester anti-feu selon la revendication 6 ayant subi un traitement de grattage et présentant un coefficient de friction d'une surface du tissu tissé, tricoté, comme mesuré par un testeur de surface KES-FB4, de 0,200 à 0,300.

**8.** Tissu gratté tricoté chaîne en polyester anti-feu qui est un tissu gratté tissé, tricoté comprenant le tissu tissé, tricoté en polyester anti-feu selon la revendication 6 ayant subi un traitement de grattage et présentant une durée de persistance de flamme ne dépassant pas 3 secondes, comme mesuré par le procédé de test suivant :

une flamme d'un briquet est approchée de l'extrémité inférieure d'un échantillon (1,5 cm x 20 cm) maintenu à la verticale et la flamme est retirée dès que l'échantillon s'enflamme, suite à quoi on mesure la durée de persistance de flamme.

**9.** Tissu non tissé en polyester anti-feu comprenant, au moins pour partie, la fibre de polyester anti-feu selon la revendication 1.